Europäisches Patentamt

European Patent Office

Office européen des brevets

(19)

(11) Numéro de publication: **0 172 061**

**A1**

## (12) DEMANDE DE BREVET EUROPEEN

(21) Numéro de dépôt: **85401383.6**

(22) Date de dépôt: **08.07.85**

(51) Int. Cl.⁴: **B 29 C 45/14**
**B 29 C 45/38**

(30) Priorité: **20.07.84 FR 8411511**

(43) Date de publication de la demande:
**19.02.86 Bulletin 86/8**

(84) Etats contractants désignés:
**AT CH DE GB IT LI**

(71) Demandeur: **CLEXTRAL**
**Tour Fiat 1 place de la Coupole**
**F-92400 Courbevoie(FR)**

(72) Inventeur: **Quinet, Jean-Pierre**
**Saint Ferrol d'Auroure**
**F-43330 Pont Salomon(FR)**

(74) Mandataire: **Bressand, Georges et al,**
**c/o CABINET LAVOIX 2 Place d'Estienne d'Orves**
**F-75441 Paris Cedex 09(FR)**

(54) **Machine automatique pour l'injection de formes sur des supports continus.**

(57) La présente invention a pour objet une machine automatique pour l'injection de formes en matière synthétique ou consommable sur des supports continus.

Suivant l'invention, la machine automatique comprend:

- un système (1) de stockage et de dévidage de bobines (11) des supports continus (10),

- un alimentateur hydropneumatique (2) qui distribue les supports (10) suivant deux nappes parallèles a et b et commande le tirage desdits supports (10) à la longueur désirée pour chaque cycle de travail,

- une presse (3) à fermeture horizontale,

- deux unités d'injection A et B disposées face à face de part et d'autre de la presse (3) pour l'injection simultanée de matière synthétique ou consommable,

- un ensemble (4) de tension et de décarottage des supports continus,

- un système (5) de triage et de recyclage en continu et en automatique des déchets de matière,

- et des pupitres de commande et des armoires d'automatisme.

L'invention s'applique par exemple à la production automatique d'éléments de rideaux de porte à base de perles en matière plastique.

EP 0 172 061 A1

./...

Croydon Printing Company Ltd

Fig 1

Machine automatique pour l'injection de formes sur des supports continus

La présente invention a pour objet une machine automatique pour l'injection de formes en matière synthétique ou consommable sur des supports continus. La matière synthétique utilisée peut être par exemple des thermoplastiques ou des caoutchoucs élastomères thermodurcissables et la matière consommable par exemple des bio-polymères ou une matière alimentaire.

Cette machine s'applique notamment à la production automatique d'éléments de rideaux de porte à base de perles en matière plastique.

En effet, il est connu d'utiliser, pour assurer une séparation entre deux pièces, un rideau constitué de plusieurs fils disposés les uns à côté des autres et sur lesquels sont fixées, à intervalles réguliers, des perles plastiques de géométrie et de couleur différentes pour que le rideau s'intègre facilement dans le décor.

Jusqu'à présent ces éléments de rideaux sont fabriqués en semi-continu par un procédé faisant appel à une main d'oeuvre importante.

La machine selon l'invention permet donc de produire automatiquement et simultanément plusieurs éléments sur lesquels sont moulés des formes en matière synthétique ou consommable de géométrie et de couleur différentes.

Suivant l'invention, la machine automatique comprend :
- un système de stockage et de dévidage de bobines des supports continus,
- un alimentateur hydropneumatique qui distribue les supports continus suivant deux nappes parallèles et commande le tirage desdits supports à la longueur désirée pour chaque cycle de travail,
- une presse à fermeture horizontale,
- deux unités d'injection disposées face à face de part et d'autre de la presse pour l'injection simultanée de matière synthétique ou consommable,
- un ensemble de tension et de décarottage des supports continus,
- un système de triage et de recyclage en continu et en automatique des déchets de matière,
et des pupitres de commande et des armoires d'automatisme.

D'autres avantages et caractéristiques de l'invention seront mis en évidence dans la suite de la description, donnée à titre d'exemple non limitatif, en référence aux dessins annexés dans lesquels :
- les figures 1 et 2 sont deux vues schématiques respectivement de face et de côté de la machine conforme à l'invention par exemple pour la production d'éléments de rideaux de porte à base de perles en matière plastique

- la figure 3 est une vue à plus grande échelle du chariot supérieur de calibrage des longueurs des supports continus.

- la figure 4 est une vue de dessus du moule porte-empreinte.

- la figure 5 est une vue de l'ensemble de tirage et décarottage des supports continus.

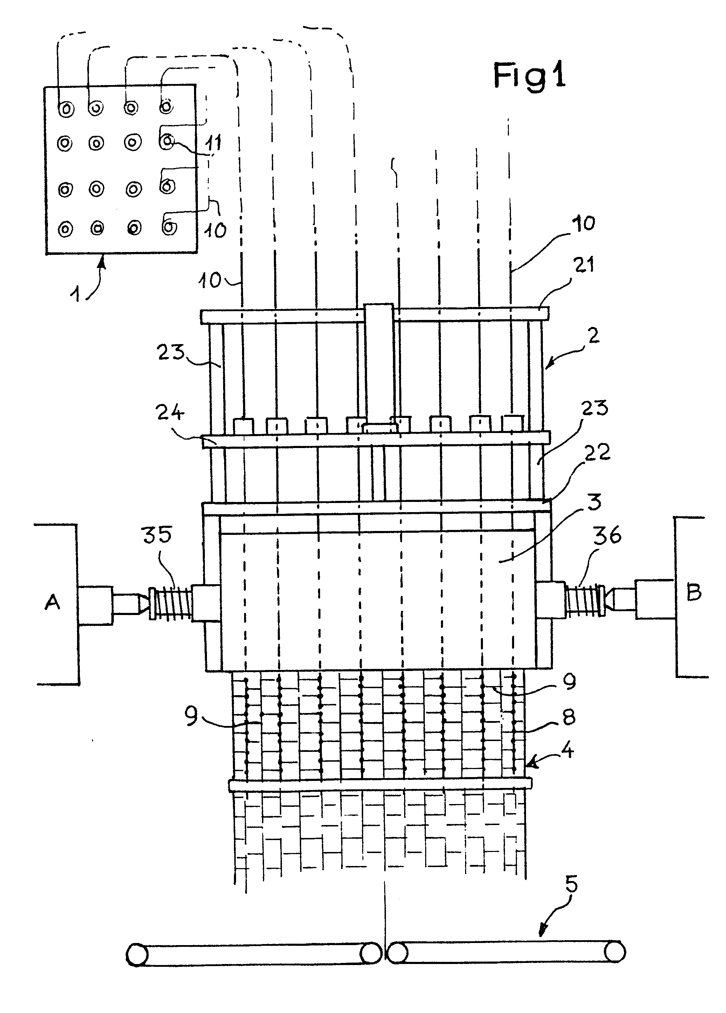

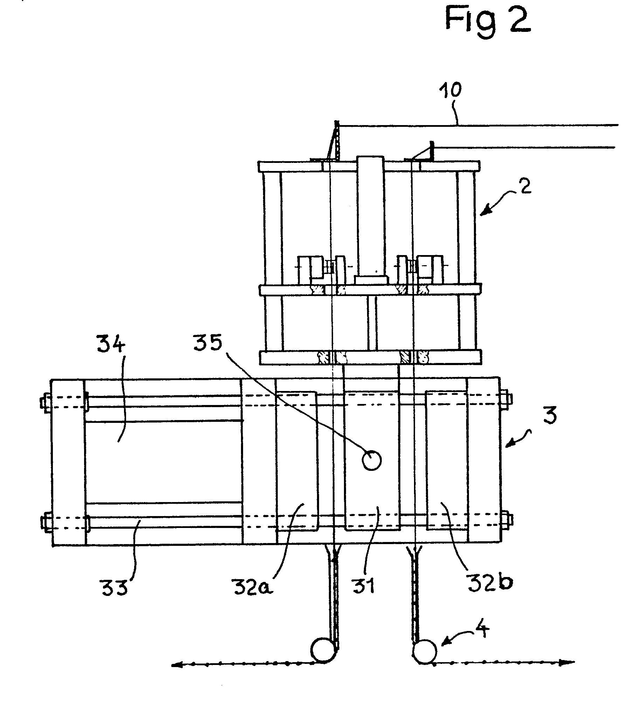

En se reportant tout d'abord aux figures 1 et 2, on voit que la machine automatique pour l'injection de formes par exemple en thermoplastique sur un support continu se compose : - d'un cantre 1 d'alimentation de fils à seize broches permettant de recevoir seize bobines 11, - d'un alimentateur hydropneumatique 2 distribuant deux nappes parallèles de fils, - d'une presse 3 à fermeture horizontale et - deux unités d'injection A et B disposées face à face de part et d'autre de la presse 3. Cette machine comporte également, en-dessous de la presse 3, un ensemble 4 de tension et de décarottage des supports continus 10 et enfin un système 5 de triage par couleur et de recyclage en continu et en automatique des déchets essentiellement composés des éléments nécessaires à l'alimentation des empreintes du moule.

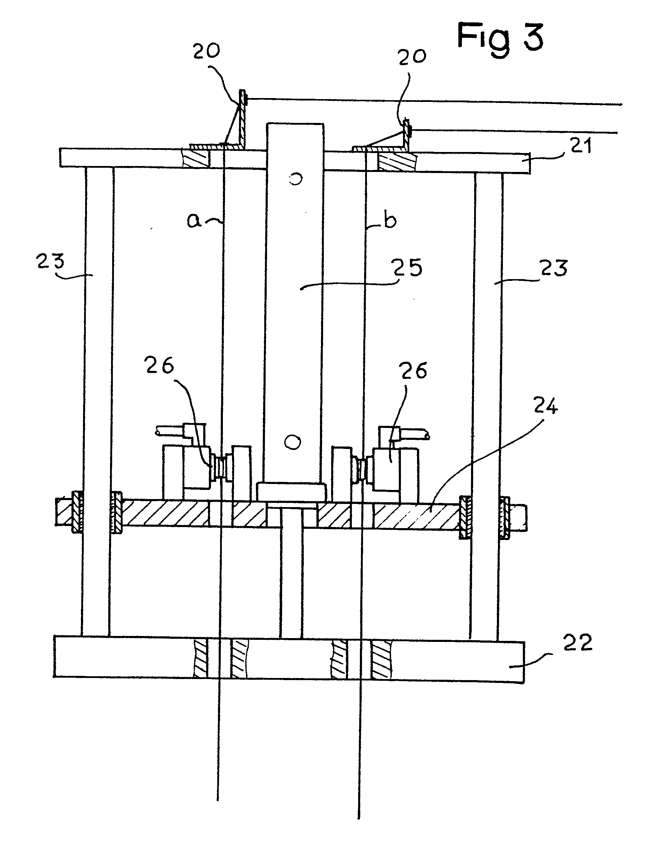

Les supports continus constitués par les fils 10 sont, à la sortie du cantre 1, dirigés vers l'alimentateur hydropneumatique 2 où ils sont distribués selon deux nappes parallèles a et b, par des guides 20. Cet alimentateur 2 (figures 1 et 3) comporte un cadre supérieur 21 et un cadre inférieur 22 reliés par des colonnes 23 sur lesquelles coulisse un chariot 24. Les déplacements du chariot 24 sont commandés par un vérin hydraulique 25 à double effet. Le chariot 24 est muni de petites pinces pneumatiques 26 qui assurent, pendant le déplacement dudit chariot, le tirage des fils 10 à la longueur désirée pour chaque cycle de travail.

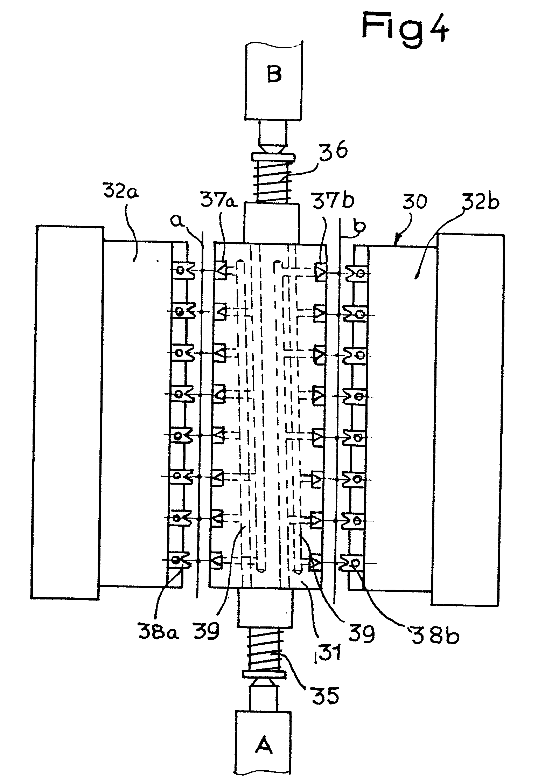

Les deux nappes a et b traversent ensuite la presse 3 disposée en-dessous de l'alimentateur 2. Cette presse comporte un moule bi-étage 30 (figures 2 et 4) formé par un plateau intermédiaire fixe 31 et par deux plateaux mobiles 32a et 32b disposés de part et d'autre dudit plateau intermédiaire. Le plateau intermédiaire 31 est donc positionné entre les deux nappes a et b. L'action simultanée de fermeture des plateaux mobiles 32a et 32b guidés par les colonnes 33 est provoquée par un vérin 34. Le plateau intermédiaire 31, constituant le bloc chaud du moule, est muni de deux buses télescopiques 35 et 36 de décompression, face à face et perpendiculaires à l'axe de fermeture du moule.

L'unité d'injection A est disposée en face de la buse 35 et l'unité d'injection B en face de la buse 36 ce qui permet l'injection simultanée de matière plastique de deux couleurs différentes. Pour le moulage des perles sur les fils 10 des deux nappes a et b, le plateau intermédiaire 31 porte, sur chacune de ses faces latérales, des barreaux verticaux interchangeables 37a et 37b. Les plateaux mobiles 32a et 32b portent également des barreaux verticaux interchangeables 38a et 38b disposés en face des barreaux 37a et 37b du plateau intermédiaire.(figure 4).

Les barreaux 37a-37b et 38a-38b, dans lesquels sont gravés les empreintes des perles à produire, constituent la seule partie interchangeable du moule dans le cas de changement de modèle, chacun d'eux ayant son propre circuit de refroidissement. Le plateau intermédiaire 31 est équipé de cartouches chauffantes, non représentées, régulées suivant des zones indépendantes ce qui permet de maintenir le plastique introduit par les unités d'injection A-B en température pour les diriger vers les empreintes des barreaux. A cet effet, le plateau intermédiaire 31 comporte des petits conduits d'alimentation 39 reliant les buses 35 et 36 avec les empreintes formées sur les barreaux 37a et 37b. Ces petits conduits 39 sont disposés de telle façon que chaque buse alimente simultanément les empreintes des barreaux 37a et 37b pour produire sur les supports des nappes a et b une succession de perles de couleur différente.

Les produits moulés sortent donc du moule en deux nappes a et b composées chacune de huit fils 10 supportant les perles 8 de forme et de couleurs différentes et reliées entre elles par des canaux 9 de distribution de matière après refroidissement, comme représenté sur la figure 1. Ensuite un dispositif de guidage les conduit vers un ensemble 4 de tirage et de décarottage séparant les canaux de distribution 9 des produits finis.

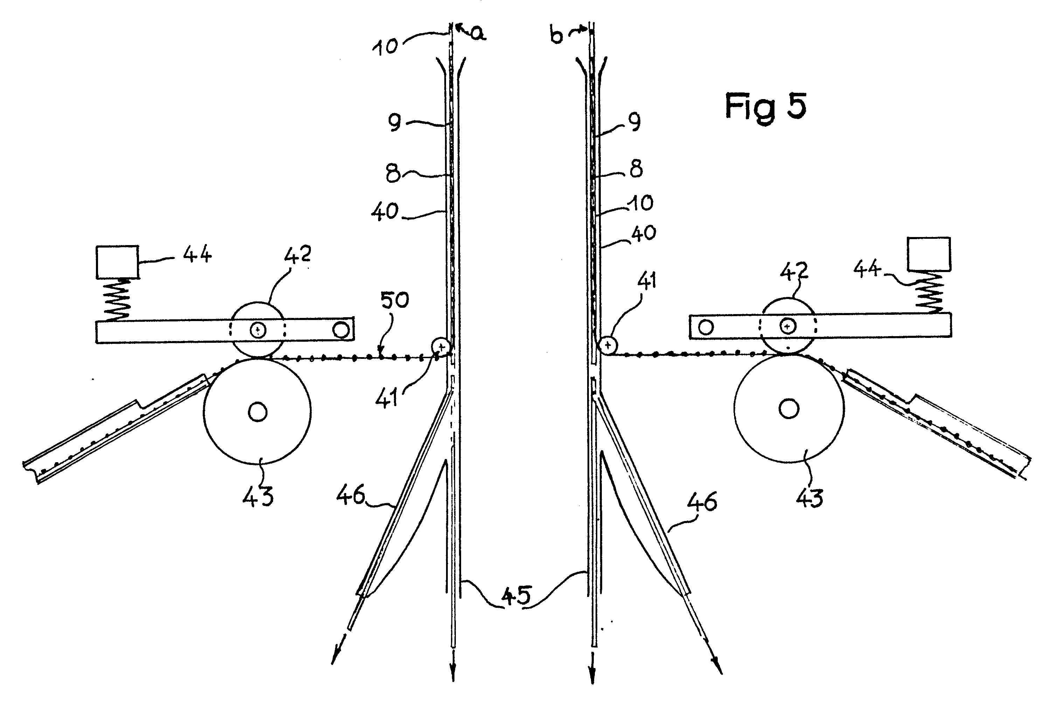

Cet enemble 4 (figure 5) placé sous la face inférieure du plateau intermédiaire 31 du moule 3 se compose, pour chaque nappe a et b, d'un guide 40, d'un petit rouleau transversal 41, et de deux rouleaux tendeurs 42 et 43 qui assurent la tension des fils selon une direction perpendiculaire à la direction de sortie du moule. Au niveau du petit rouleau 41, les produits moulés subissent un changement de direction de 90°, ce qui provoque automatiquement la séparation des produits finis 50 avec les canaux de distribution 9 par cassure des points de liaison. Les produits finis de chaque nappe sont tirés par les rouleaux 42 et 43, qui sont appliqués les uns sur les autres par un mécanisme à ressort 44.

Les déchets de chaque nappe a et b, essentiellement composés des canaux de distribution 9 nécessaires à l'alimentation des empreintes du moule, sont triés automatiquement en fonction de leur couleur par un système 5 comprenant des rampes d'orientation 45 pour la première couleur et des rampes 46 pour la seconde couleur.

Cette machine automatique pour l'injection de formes en thermoplastique sur un support continu fonctionne de la manière suivante.

L'ensemble de l'unité est animé par deux groupes électro-pompes, et la commande s'effectue au moyen de pupitres et d'armoires électroniques d'automatisme.

Avant la mise en route de la machine, les fils 10 sont dévidés des bobines 11 du cantre 1, et introduit dans les guides 20 de l'alimentateur hydropneumatique 2 pour former deux nappes parallèles a et b. Ensuite les fils 10 passent dans le moule bi-étage 30 de la presse 3, puis dans les guides 40 de l'ensemble 4 où ils sont introduits entre les rouleaux tendeurs 42 et 43. Le moulage des formes en thermoplastique sur ces fils s'effectue par cycle, c'est-à-dire qu'entre chaque cycle, les fils 10 se déplacent d'une certaine longueur. Pour celà, la tension des fils par les rouleaux tendeurs 42 et 43 est synchronisé avec les déplacements du chariot 24 de l'alimentateur 2.

Une fois que les fils 10 sont positionnés, l'opération de moulage peut commencer. Sous l'action du vérin 34 de la presse 3, le moule 30 se ferme de telle sorte que les barreaux 38a s'appliquent sur les barreaux 37a et les barreaux 38b sur les barreaux 37b, en coinçant les fils de chaque nappe a et b. L'étanchéité entre les empreintes de chaque barreau est assuré par le fil lui-même.

Dès que le moule 30 est fermé, l'unité d'injection A injecte, par la buse 35, la matière plastique d'une certaine couleur, et l'unité d'injection B injecte, par la buse 36, la matière plastique d'une autre couleur. Le plastique, maintenu en température, est canalisé par les petits conduits 39 vers les empreintes des barreaux 37a-38a et 37b-38b. En fonction des modèles choisis, les deux matières plastiques se répondent simultanément dans les empreintes des barreaux pour former, à intervalles réguliers sur les fils 10 de chaque nappe a et b, une succession de perles de forme et de couleur différentes.

Aussitôt que l'opération de moulage est terminée, le moule 30 s'ouvre. Le chariot 24 de l'alimentateur 2 se trouvant en position haute, c'est-à-dire à proximité du cadre supérieur 21, les pinces 26 se ferment de façon à saisir les fils 10. Sous l'action du vérin 25, le chariot 24 glisse sur les colonnes 24 et descend pour venir en butée contre le cadre inférieur 22. Au cours de ce mouvement, les fils 10 sont tirés d'une longueur déterminée correspondant à la course du chariot 24 et bien entendu à la hauteur du moulage afin que l'intervalle entre les perles soit respecté. Ensuite le moule 30 se ferme et un nouveau cycle de moulage peut commencer. Les pinces 26 s'ouvrent et le chariot 24 reprend sa position initiale. La tension des fils 10 est assurée par les rouleaux tendeurs 42 et 43.

Les produits moulés sortent de la presse 3 après chaque cycle en deux nappes composées chacune de fils supportant les perles 8 reliées entre elles par les canaux de distribution 9. Au niveau des petits rouleaux 41, les canaux de distribution 9 se séparent automatiquement des produits finis 50. Les produits finis 50 sont ensuite évacués par gravité dans des conteneurs de stockage. Les canaux de distribution 9 sont triés automatiquement en fonction de leur couleur par les rampes 45 et 46, et évacués par des tapis transporteurs. Puis, ils sont broyés et renvoyés au niveau de l'alimentation de chacune des unités d'injection, après addition au passage, de matière vierge.

Cette machine permet donc de produire automatiquement et simultanément plusieurs éléments de rideaux à base de perles plastique de géométrie et de couleur différentes. De plus, l'interchangeabilité rapide des barreaux porte-empreintes du moule permet de changer les modèles et d'inverser facilement les couleurs sur un même fil.

Il est bien entendu que l'on peut sans sortir du cadre de l'invention imaginer des variantes et des perfectionnements de détail et de même envisager l'emploi de moyens équivalents. En effet, on peut utiliser cette machine pour mouler sur des supports continus des formes en caoutchouc élastomère thermodurcissable ou encore des formes en matière consommable, par exemple pour la production de friandises en sucre sur des supports continus également consommables.

6

## REVENDICATIONS

1.- Machine automatique pour l'injection sur des supports continus de formes en matière synthétique ou consommable, caractérisée par le fait qu'elle comprend :

- un système (1) de stockage et de dévidage de bobines (11) des supports continus (10),

- un alimentateur hydropneumatique (2) qui distribue les supports (10) suivant deux nappes parallèles a et b et commande le tirage desdits supports (10) à la longueur désirée pour chaque cycle de travail,

- une presse (3) à fermeture horizontale comportant un moule pour réaliser des formes de géométries différentes,

- deux unités d'injection A et B disposées face à face de part et d'autre de la presse (3) pour l'injection simultanée de matière synthétique ou consommable de couleurs différentes,

- un ensemble (4) de tension et de décarottage des supports continus,

- un système (5) de triage et de recyclage en continu et en automatique des déchets de matière,

- et des pupitres de commande et des armoires d'automatisme.

2.- Machine automatique selon la revendication 1, caractérisée par le fait que l'alimentateur hydropneumatique (2) comporte un chariot mobile (20) qui se déplace, sous l'action d'un vérin hydraulique (25) à double effet, sur des colonnes verticales (23) montées entre un cadre supérieur (21) et un cadre inférieur (22).

3.- Machine automatique selon la revendication 2, caractérisée pa le fait que le chariot mobile (20) est muni de petites pinces pneumatiques (26) assurant, pendant le déplacement dudit chariot, le tirage des supports (10) à la longueur désirée pour chaque cycle de travail.

4.- Machine automatique selon la revendication 1, caractérisée par le fait que la presse (3), disposée en-dessous de l'alimentateur hydropneumatique (2), comporte un moule bi-étage (30) formé par un plateau intermédiaire fixe (31) et par deux plateaux mobiles (32a) et (32b) disposés de part et d'autre dudit plateau intermédiaire.

5.- Machine automatique selon la revendication 4, caractérisée par le fait que le plateau intermédiaire (31), constituant le bloc chaud du moule, est muni de deux buses télescopiques (35) et (36) de décompression, face à face et perpendiculaire à l'axe de fermeture dudit moule.

6.- Machine automatique selon les revendications 4 et 5, caractérisée par le fait que les faces de moulage du plateau intermédiaire (31) et des deux plateaux mobiles (32a) et (32b) portent des barreaux (37a- 37b, 38a-38b) verticaux interchangeables sur lesquels sont gravés les empreintes des formes à produire sur les supports continus, chacun d'eux ayant son propre circuit de refroidissement.

7.- Machine automatique selon les revendications 5 et 6, caractérisée par le fait que le plateau intermédiaire (31) comporte des petits conduits d'alimentation (39) reliant les buses (35) et (36) avec les empreintes formées sur les barreaux (37a) et (37b).

8.- Machine automatique selon la revendication 7, caractérisée par le fait que les petits conduits (39) sont disposés de telle façon que chaque buse (35-36) alimente simultanément les empreintes des barreaux (37a - 37b) pour produire sur chaque support des nappes a et b une succession de formes (8) de couleur différente.

9.- Machine automatique selon la revendication 1, caractérisée par le fait que l'ensemble (4) de tension et de décarottage des supports continus, placé sous la face inférieure du plateau intermédiaire (31) du moule (3) se compose, pour chaque nappe a et b, d'un guide (40), d'un petit rouleau transversal (41) et de deux rouleaux tendeurs (42) et (43) assurant la tension des supports.

10.- Machine automatique selon la revendication 9, caractérisée par le fait que les produits moulés sortant du moule (30) subissent, au niveau du petit rouleau transversal (41), un changement de direction de 90° provoquant automatiquement la séparation des produits finis (50) avec les canaux de distribution reliant les formes entre elles, par cassure des points de liaison.

11.- Machine automatique selon la revendication 1, caractérisée par le fait que le système (5) de triage et de recyclage en continu des déchets constitués par les canaux de distribution (9) est formé par des rampes (45-46) qui évacuent lesdits déchets, en fonction de leur couleur, vers des tapis transporteurs de recyclage.

Fig 1

1/5

0172061

Fig 2

0172061

Fig 3

# Fig 4

Fig 5

## DOCUMENTS CONSIDERES COMME PERTINENTS

| Catégorie | Citation du document avec indication. en cas de besoin des parties pertinentes | Revendication concernée | CLASSEMENT DE LA DEMANDE (Int. Cl.4) |
|---|---|---|---|
| Y | GB-A- 849 899 (IRVING)<br>* En entier * | 1,4,6 | B 29 C 45/14<br>B 29 C 45/38 |
| | --- | | |
| Y | DE-C- 812 839 (WAGNER)<br>* En entier * | 1 | |
| | --- | | |
| Y | GB-A-1 456 311 (LEVINE)<br>* En entier * | 1 | |
| | --- | | |
| Y | GB-A-1 103 735<br>(SIEMENS-SCHUCKERTWERKE)<br>* Page 2, ligne 103 - page 3, ligne 12; figures 1,2 * | 1,6 | |
| A | | 7 | |
| | --- | | **DOMAINES TECHNIQUES RECHERCHES (Int. Cl.4)** |
| Y | US-A-4 249 872 (AKAURA)<br>* En entier * | 1 | B 29 C<br>A 47 H |
| A | | 2,3 | |
| | --- | | |
| Y | FR-A-2 294 041 (MANCEAU)<br>* En entier * | 1,4,5 | |
| A | | 7 | |
| | ---     -/- | | |

Le présent rapport de recherche a été établi pour toutes les revendications

| Lieu de la recherche | Date d'achèvement de la recherche | Examinateur |
|---|---|---|
| LA HAYE | 28-10-1985 | BOLLEN J.A.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur. mais publié à la date de dépôt ou après cette date
D : cité dans la demande
L : cité pour d'autres raisons

& : membre de la même famille. document correspondant

OEB Form 1503 03 82

Office européen
des brevets

**RAPPORT DE RECHERCHE EUROPEENNE**

## DOCUMENTS CONSIDERES COMME PERTINENTS

| Catégorie | Citation du document avec indication en cas de besoin des parties pertinentes | Revendication concernée | CLASSEMENT DE LA DEMANDE (Int. Cl 4) |
|---|---|---|---|
| Y | FR-A-1 512 228 (UNITED SHOE MACHINERY DE FRANCE) <br> * En entier * <br><br> --- | 5 | |
| A | EP-A-0 109 662 (SOSHIDA KOGYO) <br> * Page 10, ligne 24 - page 11, ligne 13; figure 2 * <br><br> ----- | 9-11 | |

DOMAINES TECHNIQUES
RECHERCHES (Int Cl 4)

Le present rapport de recherche a été établi pour toutes les revendications

| Lieu de la recherche | Date d'achèvement de la recherche | Examinateur |
|---|---|---|
| LA HAYE | 28-10-1985 | BOLLEN J.A.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82